# EUROPÄISCHE PATENTSCHRIFT

(11) **EP 4 209 430 B1**
(45) Veröffentlichungstag und Bekanntmachung des Hinweises auf die Patenterteilung: **24.07.2024**
(21) Anmeldenummer: 22217411.2
(22) Anmeldetag: 30.12.2022
(51) Int. Cl.: B65D 81/32, B01F 35/71

(54) **BEHÄLTER**
CONTAINER
RÉCIPIENT

(30) Priorität: 10.01.2022 AT 500042022
(43) Veröffentlichungstag der Anmeldung: 12.07.2023
(73) Patentinhaber: Goritschan, Michael, 8665 Langenwang (AT)
(72) Erfinder: Goritschan, Michael, 8665 Langenwang (AT)
(74) Vertreter: Vinazzer, Edith

(56) Entgegenhaltungen:
- US-A1- 2006 049 127
- US-B1- 7 066 323

## Beschreibung

Die Erfindung betrifft einen Behälter mit einem Gehäuse zur Aufnahme einer flüssigen Mischkomponente und zur Abgabe der Mischkomponente in einen weiteren, einen Behälterhals mit einem Außengewinde aufweisenden Behälter und mit einer verschließbaren Entnahmeöffnung und einem Gehäuseboden mit einem ein Innengewinde aufweisenden Gewindeansatz zum Aufschrauben auf den Behälterhals des weiteren Behälters und
mit einem Trennelement im Gehäuseinneren, welches die Mischkomponente im Gehäuse zurückhält und welches beim Aufschrauben auf den weiteren Behälter vom Behälterhals aufdrückbar ist.

Ein derartiger Behälter ist beispielsweise aus der US 2002/066677 A1 bekannt.

Mit dem Gewindeansatz ist eine auf den weiteren Behälter aufschraubbare, eine Spitze aufweisende Kappe verschraubbar, sodass beim Aufschrauben des Behälters auf den weiteren Behälter die im Inneren des Behälters befindliche Membran von der Spitze der Kappe durchstoßen wird. Ein weiteres, ähnliches Konzept zeigt die WO 2014/063981 A1. Bei dieser Ausführung ist der Behälter mit einer Kammer zur Aufnahme der Mischkomponente und mit einem Adapter versehen, welcher mit der Kammer und mit dem weiteren Behälter, beispielsweise einer Flasche, verbindbar ist. Die Kammer ist relativ zum Adapter verdrehbar, sodass eine Schneide den Boden der Kammer durchtrennen kann und ein Durchmischen der Flüssigkeiten erfolgt. Weitere Behälter sind bekannt aus der US 2006/049127 A und der US 7,066,323 B1.

Die bekannten derartigen Behälter, mittels welchen eine Mischkomponente mit einer zweiten Flüssigkeit in einem weiteren Behälter bei Bedarf vermischt werden kann, weisen zumindest zwei Komponenten auf, da eine unmittelbare flüssigkeitsdichte Anordnung des Behälters auf dem weiteren Behälter schwierig zu erstellen ist. Eine nochmalige Benützung des Behälters nach der erstmaligen Verwendung ist infolge der zerstörten Membran nicht möglich.

Der Erfindung liegt daher die Aufgabe zugrunde, einen Behälter der eingangs genannten Art einteilig ausführen zu können, wobei eine flüssigkeitsdichte Anordnung auf dem weiteren Behälter auch nach der Abgabe der Mischkomponente in den weiteren Behälter sichergestellt sein soll und wobei nochmalige Verwendungen des Behälters möglich sein sollen.

Gelöst wird die gestellte Aufgabe erfindungsgemäß dadurch, dass das Trennelement von einer elastischen Membran und einem plättchenförmigen Chip gebildet ist, wobei die Membran oberhalb des Gehäusebodens angeordnet ist, eine dem Gehäuseboden zugewandte und eine dem Gehäuseboden abgewandte Seite sowie eine mittige Öffnung aufweist,
wobei der Chip die mittige Öffnung der Membran an der dem Gehäuseboden abgewandten Seite lösbar verschließt ist und
wobei eine elastischen Dichtlippe die mittige Öffnung der Membran an ihrer dem Gehäuseboden zugewandten Seite umläuft, derart, dass sich die Dichtlippe bei aufgeschraubtem weiteren Behälter an die Innenseite des Behälterhalses abdichtend anlegt.

Die Dichtlippe gewährleistet eine optimale und flüssigkeitsdichte Abdichtung der beiden Behälter nach dem Ablösen des Chips von der Membran. Der Behälter ist daher, bis auf den Chip, einteilig ausführbar. Dadurch, dass ein Chip lösbar mit der elastischen Membran verbunden ist, kann er auf der Membran wieder lösbar angebracht werden, wobei auch ein Ersatzchip verwendet werden kann, sodass ein Wiederverwenden des Behälters ermöglicht ist.

Bei einer bevorzugten Ausführung ist die Dichtlippe relativ zur Membran unter einem Winkel von 60° bis 80° nach außen geneigt. Auf diese Weise wird für ein optimal Anlegen der Dichtlippe an die Innenseite des Behälterhalses gesorgt.

In diesem Zusammenhang ist es ferner vorteilhaft, wenn die Dichtlippe bis zum Gewindeansatz des Gehäuses am Gehäuseboden reicht oder in einem Abstand von bis zu 1,00 mm, insbesondere von bis zu 0,50 mm, vor dem Gewindeansatz endet oder bis zu 1,00 mm, insbesondere bis zu 0,50 mm, in den Gewindeansatz hineinragt.

Der Chip kann auf besonders zweckmäßige und einfache Weise mit der Membran durch Kleben oder Verschweißen verbunden werden. Diese Verbindung wird jedenfalls derart erstellt, dass ein gewolltes Lösen des Chips von der Membran zum Durchmischen der Flüssigkeiten sichergestellt ist.

Die Membran weist bevorzugt eine Materialstärke von 0,40 mm bis 0,60 mm auf und ist daher auch vorteilhafterweise elastisch verformbar, sodass auf diese Weise ein Lösen des Chips von der Membran ohne Zerstören der Membran möglich ist. Der Chip weist zudem bevorzugt eine geringere Materialstärke auf als die Membran, insbesondere eine Materialstärke von 0,10 mm bis 0,30 mm.

Die Entnahmeöffnung des Behälters wird vorzugsweise von einem weiteren Gewindeansatz gebildet, welcher mit einem Außengewinde versehen ist, auf welches ein Verschluss aufschraubbar ist, welcher insbesondere der Verschluss des weiteren Behälters ist.

Bei einer weiteren, besonders bevorzugten Ausführung ist das Gehäuse ein zylindrischer Körper, wobei die Membran kreisringförmig und der die mittige Öffnung der Membran verschließende Chip insbesondere kreisförmig sind. Die Ausführung des Gehäuses als zylindrischer Körper stellt eine für den Benützer angenehme Handhabung des Behälters sicher.

Nachdem der Behälter wiederverwendbar ist, ist es vorteilhaft, wenn eine gute Reinigung des Innenraumes nach Benützung gewährleistet ist. In diesem Zusammenhang ist es daher günstig, wenn der Gehäuseboden des Gehäuses über seinen Umfang mit einer Anzahl von insbesondere langlochartig ausgebildeten Durchbrüchen versehen ist.

Ein bevorzugtes, lebensmittelechtes Material für die Bestandteile des Behälters aus Kunststoff ist PET. Eine derartige Ausführung hat auch den Vorteil, dass der Behälter, abgesehen vom Chip, in Einem mittels eines 3D-Kunststoffdruckes herstellbar ist.

Weitere Merkmale, Vorteile und Einzelheiten der Erfindung werden nun anhand der Zeichnung, die ein Ausführungsbeispiel darstellt, näher beschrieben. Dabei zeigen
Fig. 1 eine Seitenansicht des Behälters,
Fig. 2 eine Ansicht des Behälters schräg von unten,
Fig. 3 einen Schnitt entlang der Linie III-III der Fig. 1 und
Fig. 4 bis Fig. 7 jeweils in einer zu Fig. 3 analogen Schnittdarstellung aufeinanderfolgende Stadien bei der Benützung des Behälters.

Der in den Figuren dargestellte Behälter ist zum Einmischen bzw. zur Zugabe einer flüssigen Mischkomponente in einen weiteren Behälter, insbesondere eine Flasche, vorgesehen. Die Mischkomponente ist vorzugsweise ein Konzentrat, insbesondere ein Fruchtsaftkonzentrat, welches zur Herstellung einer trinkfertigen Zubereitung mit Wasser vermischt wird, oder eine flüssige Medikamentenkomponente, die mit einer zweiten flüssigen Komponente zu einem zur Vergabe geeigneten Medikament vermischt wird.

In der nachfolgenden Beschreibung beziehen sich Begriffe wie oben, unten, oberes, unteres, oberer, unterer, senkrecht und dergleichen auf die in den Figuren gezeigte Lage des Behälters.

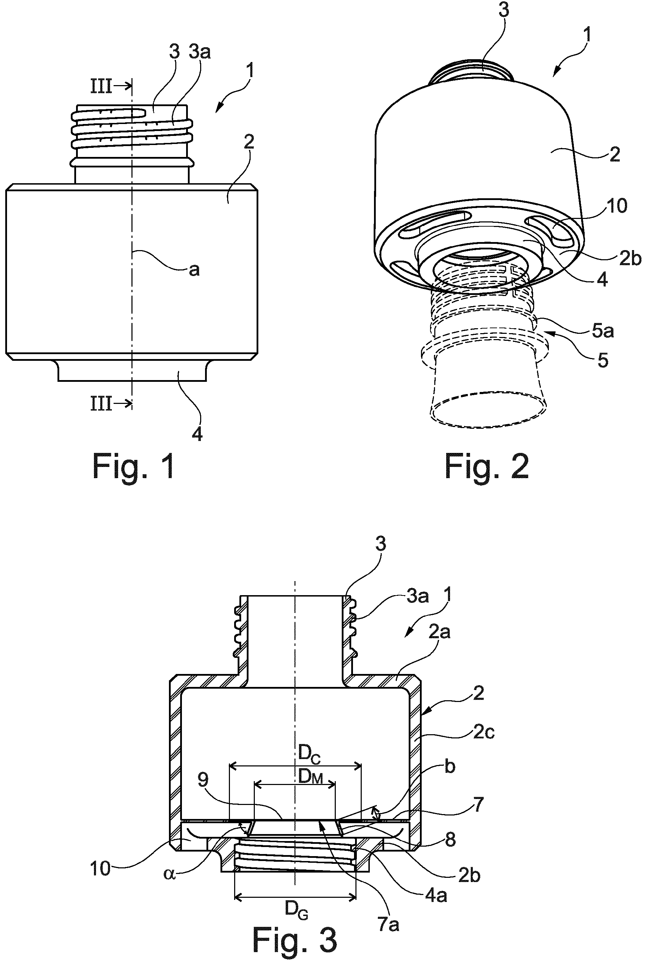

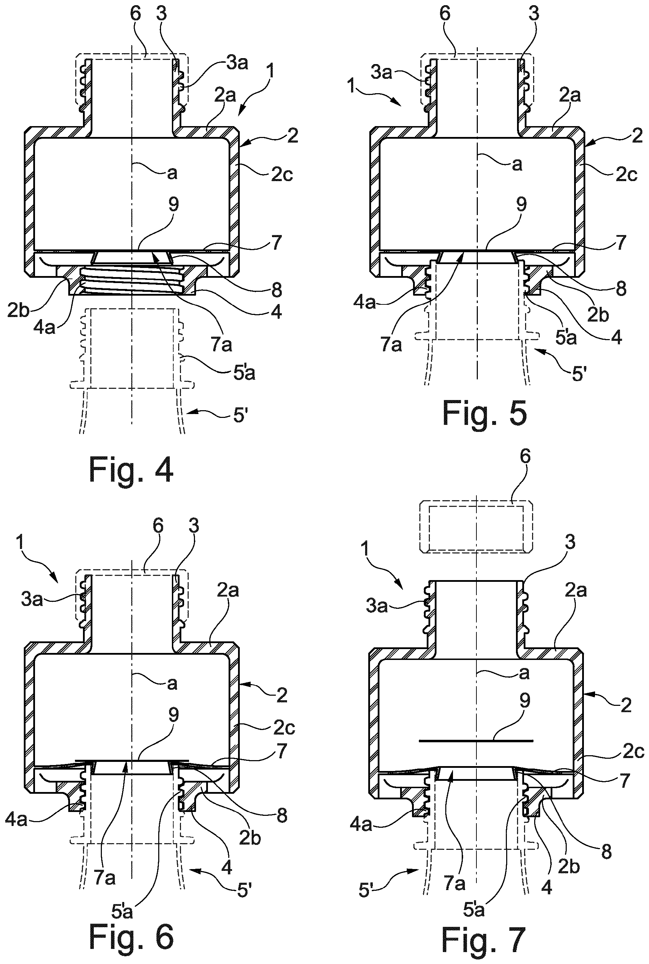

Der in den Figuren 1 bis 7 beispielhaft gezeigte Behälter 1 weist ein kreiszylindrisches Gehäuse 2 mit einer zentralen Achse a, einem Gehäuseoberteil 2a, einem zu diesem parallelen Gehäuseboden 2b und eine Gehäusewand 2c auf. Zentrisch zur Achse a sind am Gehäuseoberteil 2a des Gehäuses 2 ein oberer Gewindeansatz 3 und am Gehäuseboden 2b des Gehäuses 2 ein unterer Gewindeansatz 4 ausgebildet. Der obere Gewindeansatz 3 weist ein Außengewinde 3a auf, auf welcher ein mit einem Innengewinde versehener Verschluss 6, welcher in den Figuren 4 bis 7 angedeutet ist, aufschraubbar ist. Der Verschluss 6 kann ein separater Verschluss oder ein bereits vorhandener Verschluss eines weiteren Behälters 5 sein, mit dessen Behälterhals 5a der Behälter 1 verbindbar ist. Der Behälter ist insbesondere eine Flasche 5' mit einem mit einem Außengewinde versehenen Flaschenhals 5`a (Fig. 4 bis 7). Der untere Gewindeansatz 4 ist mit einem einen Durchmesser D_{G} (Fig. 3) aufweisenden Innengewinde 4a versehen, welches zum Außengewinde am Behälterhals 5a des Behälters 5 oder am Flaschenhals 5'a der Flasche 5' passt.

In einem insbesondere konstanten Abstand von einigen Millimetern, vorzugsweise von 3,00 bis 5,00 mm, vom Gehäuseboden 2b des Gehäuses 2 befindet sich im Gehäuseinneren, an die Innenseite der Gehäusewand 1c angebunden, eine kreisringförmige Membran 7, die eine Materialstärke d von vorzugsweise 0,40 mm bis 0,80 mm, insbesondere von etwa 0,60 mm, aufweist und elastisch verformbar ist. In Folge der Kreisringform weist die Membran 7 eine kreisförmige mittige Öffnung 7a auf, die von einer an der Membran 7 ausgebildeten Dichtlippe 8 umlaufen ist, welche nach unten, Richtung unterem Gewindeansatz 4 ragt und insbesondere die gleiche Materialstärke wie die Membran 7 aufweist. Die mittige Öffnung 7a weist einen Durchmesser D_{M} (Fig. 3) auf, welcher um vorzugsweise 8,00 mm bis 12,00 mm, insbesondere um 9,00 mm bis 11,00 mm geringer ist als der Durchmesser des D_{G} des Innengewindes 4a des unteren Gewindeansatzes 4. Die Dichtlippe 8 ist vom Rand der mittigen Öffnung 8a ausgehend relativ zur Membran 7 unter einem Winkel α von 60° bis 80° nach außen geneigt. Die Dichtlippe 8 weist ferner eine konstante Breite b (Fig. 3) von vorzugsweise 3,00 mm bis 6,00 mm auf, insbesondere ist die Breite b derart, dass die Dichtlippe 8 bis zur Ansatzstelle des unteren Gewindeansatzes 4 am Gehäuse 2 reicht oder in beide Richtungen in einem Abstand zur Ansatzstelle von beispielsweise bis zu 0,50 mm endet.

Die mittige Öffnung 8a der Membran 8 ist mit einem plättchenförmigen Chip 9 bedeckt und verschlossen, welcher beim gezeigten Ausführungsbeispiel kreisförmig ist und einen Durchmesser Dc (Fig. 3) aufweist, der um insbesondere 10,00 mm bis 15,00 mm größer ist als der Durchmesser D_{M} der mittigen Öffnung 7a, sodass der Chip 9 unter Verschließen der Öffnung 7a mit der Membran 7, beispielsweise durch Kleben, verbindbar ist. Der Chip 9 besteht aus einem folienartig dünnen Kunststoffmaterial und weist beispielsweise eine Materialstärke von 0,10 mm bis 0,30 mm auf.

Wie Fig. 2 zeigt, ist der Gehäuseboden 2b über seinen Umfang mit einer Anzahl von, im Beispiel vier, langlochartig ausgebildeten Durchbrüchen 10 versehen. Die Durchbrüche 10 erleichtern ein Reinigen des Innenraumes des Gehäuses 2 bei Bedarf und nach dessen Verwendung, insbesondere wenn der Chip 9, wie noch beschrieben wird, entfernt ist und die Öffnung 7a nicht mehr verschließt.

Die Verwendung des Behälters 1 bei einer mit Wasser befüllten Flasche 5` wird nun anhand der Fig. 4 bis 7 näher erläutert. Fig. 4 zeigt den Behälter 1 mit durch den Chip 9 verschlossener mittiger Öffnung 7a, der in dieser Lage entspannten Membran 7, beispielsweise aufgefüllt mit einem Fruchtsaftkonzentrat als flüssige Mischkomponente und mit am oberen Gewindeansatz 3 aufgeschraubtem Verschluss 6. Fig. 5 zeigt den auf das Gewinde am Flaschenhals 5'a aufgeschraubten Behälter 1, die Dichtlippe 8 hat sich innenseitig im Bereich des oberen Rand des Flaschenhalses 5'a angelegt und gewährleistet die Abdichtung zwischen der Flasche 5' und dem Behälter 1. Möchte der Benützer das im Behälter 1 befindliche Fruchtsaftkonzentrat mit dem in der Flasche 5' befindlichen Wasser vermischen, dreht er den Behälter 1 ein Stück weiter auf das Außengewinde der Flasche 5`. Dabei ist ein gewisser Widerstand zu überwinden, da der Rand des Flaschenhalses 5'a gegen die Membran 7 gedrückt wird, die Membran 7 gespannt wird und um den Bereich ihrer mittigen Öffnung 7a etwas angehoben wird (Fig. 6). Dabei löst sich vom Randbereich der Membran 7 der Chip 9 (Fig. 7). Das Fruchtsaftkonzentrat vermischt sich nun mit dem in der Flasche 5' befindlichen Wasser. Ein Schütteln der Flasche 5` mitsamt dem aufgeschraubten Behälter 1 unterstützt ein gutes Durchmischen. Wird nun der Verschluss 6 vom oberen Gewindeansatz 3 entfernt, kann die durchmischte Flüssigkeit entnommen werden.

Für ein Durchmischen der Mischkomponente mit der Flüssigkeit im weiteren Behälter 5 kann der weitere Behälter 5 komplett oder auch nicht komplett gefüllt sein, ein Durchmischen findet auch dann statt, wenn der weitere Behälter 5 komplett befüllt ist.

Bei alternativen Ausführungen des Behälters 1 ist das Gehäuse 2 quaderförmig oder ein auf sonstige Weise gestalteter Körper, beispielsweise ein mit fünf oder sechs Seitenflächen versehener Körper. Die im Inneren des Gehäuses 2 befindliche Membran 7 ist entsprechend der Ausgestaltung des Gehäuses 2 ausgeführt. Ist der Behälter 1 zur Verwendung mit einem üblichen Fruchtsaftkonzentrat vorgesehen, so kann mit einem Gehäusevolumen von etwa 60 ml bis 70 ml eine trinkfertige Flüssigkeit durch Mischen mit einem Liter Wasser hergestellt werden.

Auf besonders einfache, preiswerte und zweckmäßige Weise lässt sich der Behälter 1 inklusive Membran 7, jedoch ohne Chip 9, einteilig aus einem Kunststoffmaterial im 3D-Druck herstellen. Bevorzugter Werkstoff für den Behälter 1 und den Chip 9 ist PET (Polyethylenterephthalat).

### Bezugszeichenliste

- 1: Behälter
- 2: Gehäuse
- 2a: Gehäuseoberteil
- 2b: Gehäuseboden
- 2c: Gehäusewand
- 3: oberer Gehäuseansatz
- 3a: Außengewinde
- 4: unterer Gehäuseansatz
- 4a: Innengewinde
- 5: weiterer Behälter
- 5a: Behälterhals
- 5': Flasche
- 5'a: Flaschenhals
- 6: Verschluss
- 7: Membran
- 7a: mittige Öffnung
- 8: Dichtlippe
- 9: Chip
- 10: Durchbruch
- D_{M}: Durchmesser der mittigen Öffnung der Membran
- D_{G}: Durchmesser Innengewinde
- D_{C}: Durchmesser Chip
- b: Breite
- α: Winkel

## Patentansprüche

1. Behälter mit einem Gehäuse (2) zur Aufnahme einer flüssigen Mischkomponente und zur Abgabe der Mischkomponente in einen weiteren, einen Behälterhals (5a, 5'a) mit einem Außengewinde aufweisenden Behälter (5, 5') und mit einer eine verschließbaren Entnahmeöffnung und einem Gehäuseboden (2b) mit einem ein Innengewinde (4a) aufweisenden Gewindeansatz (4) zum Aufschrauben auf den Behälterhals (5a, 5'a) des weiteren Behälters (5, 5') und
mit einem Trennelement im Gehäuseinneren, welches die Mischkomponente im Gehäuse (2) zurückhält und welches beim Aufschrauben auf den weiteren Behälter (5, 5') vom Behälterhals (5a, 5'a) aufdrückbar ist,
**dadurch gekennzeichnet,**
**dass** das Trennelement von einer elastischen Membran (7) und einem plättchenförmigen Chip (9) gebildet ist, wobei die Membran (7) oberhalb des Gehäusebodens (2b) angeordnet ist, eine dem Gehäuseboden (2b) zugewandte und eine dem Gehäuseboden (2b) abgewandte Seite sowie eine mittige Öffnung (7a) aufweist,
wobei der Chip (9) die mittige Öffnung (7a) der Membran (7) an der dem Gehäuseboden (2b) abgewandten Seite lösbar verschließt ist und
wobei eine elastischen Dichtlippe (8) die mittige Öffnung (7a) der Membran (7) an ihrer dem Gehäuseboden (2b) zugewandten Seite umläuft, derart, dass sich die Dichtlippe (8) bei aufgeschraubtem weiteren Behälter (5, 5') an die Innenseite des Behälterhalses (5a, 5`) abdichtend anlegt.

2. Behälter nach Anspruch 1, **dadurch gekennzeichnet, dass** die Dichtlippe (8) relativ zur Membran (7) unter einem Winkel (α) von 60° bis 80° nach außen geneigt ist.

3. Behälter nach Anspruch 1 oder 2, **dadurch gekennzeichnet, dass** die Dichtlippe (8) bis zum Gewindeansatz (4) des Gehäuses (2) am Gehäuseboden (2b) reicht oder in einem Abstand von bis zu 1,00 mm, insbesondere von bis zu 0,50 mm, vor dem Gewindeansatz (4) endet oder bis zu 1,00 mm, insbesondere bis zu 0,50 mm, in den Gewindeansatz (4) hinein ragt.

4. Behälter nach Anspruch 1, **dadurch gekennzeichnet, dass** der Chip (9) mit der Membran (7) durch Kleben oder Verschweißen verbunden ist.

5. Behälter nach einem der Ansprüche 1 bis 4, **dadurch gekennzeichnet, dass** die Membran (7) eine Materialstärke von 0,40 mm bis 0,80 mm aufweist.

6. Behälter nach einem der Ansprüche 1 bis 5, **dadurch gekennzeichnet, dass** der Chip (9) eine Materialstärke von 0,10 mm bis 0,30 mm aufweist.

7. Behälter nach Anspruch 1, **dadurch gekennzeichnet, dass** die Entnahmeöffnung von einem weiteren Gewindeansatz (3) gebildet ist, welcher mit einem Außengewinde (3a) versehen ist, auf welches ein Verschluss aufschraubbar ist, welcher insbesondere der Verschluss (6) des weiteren Behälters (5, 5') ist.

8. Behälter nach einem der Ansprüche 1 bis 7, **dadurch gekennzeichnet, dass** das Gehäuse (2) ein zylindrischer Körper ist, wobei die Membran (7) kreisringförmig und der die mittige Öffnung (7a) der Membran (7) verschließende Chip (9) insbesondere kreisförmig sind.

9. Behälter nach einem der Ansprüche 1 bis 8, **dadurch gekennzeichnet, dass** der Gehäuseboden (2b) des Gehäuses (2) über seinen Umfang mit einer Anzahl von insbesondere langlochartig ausgebildeten Durchbrüchen (10) versehen ist.

10. Behälter nach einem der Ansprüche 1 bis 9, **dadurch gekennzeichnet, dass** er bzw. seine Bestandteile aus Kunststoff, insbesondere aus PET besteht bzw. bestehen.

11. Behälter nach einem der Ansprüche 1 bis 10, **dadurch gekennzeichnet, dass** er in einem 3D-Kunststoffdruck hergestellt ist.

## Claims

1. Container having a housing (2) for receiving a liquid mixing component and for dispensing the mixing component into another container (5, 5') with a container neck (5a, 5'a) having an external thread and having a closable extraction opening and a housing bottom (2b) with a threaded projection (4) having an internal thread (4a) for screwing onto the container neck (5a, 5'a) of the other container (5, 5') and having a separating element in the inside of the housing that retains the mixing component within the housing (2) and can be pressed open by the container neck (5a, 5'a) when screwed onto the other container (5, 5 `)
**characterized in that**
the separating element is formed by an elastic membrane (7) and a disc-shaped chip (9), wherein the membrane (7) arranged above the housing bottom (2b) has a side facing the housing bottom (2b) and a side facing away from the housing bottom (2b) and also a central opening (7a),
wherein the chip (9) releasably seals the central opening (7a) of the membrane (7) on the side facing away from the housing bottom (2b) and
wherein an elastic sealing lip (8) runs around the central opening (7a) of the membrane (7) on its side facing towards the housing bottom (2b) in such a manner that the sealing lip (8) fits tightly against the inside of the container neck (5a, 5') when the other container (5, 5') is screwed on.

2. Container according to Claim 1, **characterized in that** the sealing lip (8) is inclined outwards relative to the membrane (7) at an angle (α) of 60° to 80°.

3. Container according to Claim 1 or 2, **characterized in that** the sealing lip (8) extends up to the threaded projection (4) of the housing (2) at the housing bottom (2b) or ends at a distance of up to 1.00 mm, in particular up to 0.50 mm, before the threaded projection (4), or extends up to 1.00 mm, in particular up to 0.50 mm, into the threaded projection (4).

4. Container according to Claim 1, **characterized in that** the chip (9) is connected to the membrane (7) by gluing or welding.

5. Container according to any one of Claims 1 to 4, **characterized in that** the membrane (7) has a material thickness of 0.40 mm to 0.80 mm.

6. Container according to any one of Claims 1 to 5, **characterized in that** the chip (9) has a material thickness of 0.10 mm to 0.30 mm.

7. Container according to Claim 1, **characterized in that** the extraction opening is formed by a further threaded projection (3) which is provided with an external thread (3a), onto which a closure can be screwed, in particular the closure (6) of the other container (5, 5').

8. Container according to any one of Claims 1 to 7, **characterized in that** the housing (2) is a cylindrical body, wherein the membrane (7) is annular and the chip (9), which seals the central opening (7a) of the membrane (7), is particularly circular.

9. Container according to any one of Claims 1 to 8, **characterized in that** the housing bottom (2b) of the housing (2) is provided with a number of openings (10), particularly designed with an elongated slot shape, around its circumference.

10. Container according to any one of Claims 1 to 9, **characterized in that** it and/or its components are made of plastic, in particular PET.

11. Container according to any one of Claims 1 to 10, **characterized in that** it is manufactured using 3D plastic printing.

## Revendications

1. Récipient avec un boîtier (2) pour recevoir un composant de mélange liquide et pour distribuer le composant de mélange dans un autre récipient (5, 5') présentant un col de récipient (5a, 5'a) avec un filetage extérieur et avec une ouverture de prélèvement pouvant être fermée et un fond de boîtier (2b) avec un embout fileté (4) présentant un filetage intérieur (4a) pour le vissage sur le col de récipient (5a, 5'a) de l'autre récipient (5, 5') et avec un élément de séparation à l'intérieur du boîtier, qui retient le composant de mélange dans le boîtier (2) et qui peut être enfoncé par le col du récipient (5a, 5'a) lors du vissage sur l'autre récipient (5, 5'),
**caractérisé en ce que**
l'élément de séparation est formé par une membrane élastique (7) et une puce (9) en forme de plaquette, la membrane (7) étant disposée au-dessus du fond (2b) du boîtier, présentant un côté tourné vers le fond (2b) du boîtier et un côté opposé au fond (2b) du boîtier ainsi qu'une ouverture centrale (7a),
la puce (9) fermant de manière amovible l'ouverture centrale (7a) de la membrane (7) sur le côté opposé au fond du boîtier (2b) et une lèvre d'étanchéité élastique (8) contournant l'ouverture centrale (7a) de la membrane (7) sur son côté tourné vers le fond du boîtier (2b), de telle sorte que la lèvre d'étanchéité (8) s'applique de manière étanche contre le côté intérieur du col du récipient (5a, 5') lorsque le récipient supplémentaire (5, 5') est vissé.

2. Récipient selon la revendication 1, **caractérisé en ce que** la lèvre d'étanchéité (8) est inclinée vers l'extérieur par rapport à la membrane (7) selon un angle (a) de 60° à 80°.

3. Récipient selon la revendication 1 ou 2, **caractérisé en ce que** la lèvre d'étanchéité (8) s'étend jusqu'à l'embout fileté (4) du boîtier (2) au fond du boîtier (2b) ou se termine à une distance allant jusqu'à 1,00 mm, en particulier jusqu'à 0,50 mm, avant l'embout fileté (4) ou pénètre jusqu'à 1,00 mm, en particulier jusqu'à 0,50 mm, dans l'embout fileté (4).

4. Récipient selon la revendication 1, **caractérisé en ce que** la puce (9) est reliée à la membrane (7) par collage ou par soudage.

5. Récipient selon l'une des revendications 1 à 4, **caractérisé en ce que** la membrane (7) présente une épaisseur de matériau de 0,40 mm à 0,80 mm.

6. Récipient selon l'une des revendications 1 à 5, **caractérisé en ce que** la puce (9) présente une épaisseur de matériau de 0,10 mm à 0,30 mm.

7. Récipient selon la revendication 1, **caractérisé en ce que** l'ouverture de prélèvement est formée par un autre embout fileté (3), qui est pourvu d'un filetage extérieur (3a) sur lequel peut être vissé un bouchon, qui est notamment le bouchon (6) de l'autre récipient (5, 5').

8. Récipient selon l'une des revendications 1 à 7, **caractérisé en ce que** le boîtier (2) est un corps cylindrique, la membrane (7) étant en forme d'anneau circulaire et la puce (9) fermant l'ouverture centrale (7a) de la membrane (7) étant notamment circulaire.

9. Récipient selon l'une des revendications 1 à 8, **caractérisé en ce que** lefond de boîtier (2b) du boîtier (2) est pourvu sur sa périphérie d'un certain nombre de percées (10) réalisées notamment sous forme de trous oblongs.

10. Récipient selon l'une des revendications 1 à 9, **caractérisé en ce qu'**il est ou ses composants sont en matière plastique, notamment en PET.

11. Récipient selon l'une des revendications 1 à 10, **caractérisé en ce qu'**il est imprimé en plastique 3D.
